# EUROPEAN PATENT SPECIFICATION

(11) **EP 1 813 155 B1**
(45) Date of publication and mention of the grant of the patent: **25.07.2012**
(21) Application number: 05112989.8
(22) Date of filing: 27.12.2005
(51) Int. Cl.: A23D 9/04, A23D 9/00, A23G 9/32, A23G 9/48

(54) **Fat blend for use in fat-based coatings for ice confection**
Fettmischung zur Verwendung in Fettglazur für Speiseeis
Mélange de graisses pour l'enrobage de glaces

(43) Date of publication of application: 01.08.2007
(73) Proprietor: CSM Nederland B.V., 1112 XE Diemen (NL)
(72) Inventor: Brill-Neuman, Ines, D-28215 Bremen (DE); Hentschel, Michael, D-27777 Ganderkesee (DE)
(74) Representative: van Westenbrugge, Andries

(56) References cited:
- US-A- 4 430 350
- ALIAS Z ET AL: "Isolation of palm oil-utilising, polyhydroxyalkanoate (PHA)-producing bacteria by an enrichment technique" BIORESOURCE TECHNOLOGY, ELSEVIER, GB, vol. 96, no. 11, July 2005 (2005-07), pages 1229-1234, XP004763349 ISSN: 0960-8524
- TRAITLER H ET AL: "PALM OIL AND PALM KERNEL OIL IN FOOD PRODUCTS" JOURNAL OF THE AMERICAN OIL CHEMISTS' SOCIETY, AOCS PRESS, CHAMPAIGN, IL, US, vol. 62, no. 2, 1985, pages 417-421, XP000877260 ISSN: 0003-021X

## Description

### TECHNICAL FIELD OF THE INVENTION

The present invention relates to fat blends that can suitably be used in the manufacture of fat-based coatings for ice cream confection. More particularly, the present invention provides such a fat blend that has a low content of trans-unsaturated fatty acid.

### BACKGROUND OF THE INVENTION

Fat-based coatings are widely used in the ice confection industry to enhance the appeal and eating quality of ice confection products. Coated ice confection products are typically made by providing a core of moulded or extruded ice confection which is dipped into or enrobed with a molten fat-based coating composition.

Fat-based coating compositions for use in ice confection have to meet a wide variety of criteria.

As regards the use of the coating composition in the production of ice confection products the following criteria are important:
A short drip time, a short setting time, good adherence, a continuous layer (requires stable crystallisation) and little or no bleeding (molten ice confection seeping through the coating layer) or cracks. Furthermore, the coating layers should exhibit good storage and shock resistance without greasy properties.

Finally, the coating layers should impart a pleasant outer appearance, mouth feel and taste upon consumption.

Fat blends have been developed that enable the manufacture of coating compositions that meet the aforementioned requirements.

US 4,430,350 describes a composite frozen confection comprising a layer of fat-based confectionary, said confectionary being a suspension of sweetening and flavouring solids in an edible fat, wherein the edible fat includes a fat composition which is an interesterefied mixture of about 75% to 90% of a lauric acid or oil and about 10% to 25% of a non-lauric oil.

Z. Alias *et al., Bioresource Technology,* 96(11), 2005, pages 1229-1234, describe the fatty acid contents of a palm kernel oil and a palm olein.

H. Traitler *et al., JAOCS,* 62(2), 1985, pages 417-421, describe palm olein having a iodine value of 56.5 and higher.

These fat blends typically comprise lauric fats, such as coconut or palmkernel oils, and soft non-lauric oils such as partially hardened rapeseed oil. Lauric fats are used to obtain a short drip time and consequently for a short setting time and a crispy mouthfeel.

A disadvantage associated with the use of lauric fats is that the use of these fats in ice cream coatings yields coatings that are brittle. Therefore these products are difficult to process and must be handled with care, or else the coatings will crack.

Non-lauric fats, such as partially hardened rapeseed oil, can be used to enhance the elasticity of the fat-based ice confection coating. It makes the ice cream coating supple. An important disadvantage of these fats is the high content of trans unsaturated fatty acids which results from the hydrogenation (hardening).

Hydrogenation of vegetable oils is employed to modify the fatty acid composition of the oil. More particularly, hydrogenation aims to saturate the double bonds of the unsaturated fatty acids that are abundant in vegetable oils. An undesirable side-effect of partial hydrogenation of unsaturated fatty acids is the formation of substantial levels of trans-unsaturated fatty acids. Trans-unsaturated fatty acids, unlike the naturally occurring cis -unsaturated fatty acids, have been associated with health risks.

Non-hydrogenated non-lauric fats, such as sunflower or soya oil make the ice cream coating greasy. The use of substantial quantities of these oils in fat-based ice cream coatings destroys the crispy mouthfeel and causes the product to "smear" in the packaging.
Hence, there is a need for new fat blends that provide equal performance in ice confection coatings as the existing fat blends, but that do not contain appreciable amounts of trans fatty acids.

### SUMMARY OF THE INVENTION

The inventors have developed a new fat blend that does not contain appreciable levels of trans fatty acids, does not contain inesterified oil and that performs very well in fat-based ice-confection coatings. The fat blend of the present invention is characterised by the following fatty acid composition:
- 2 ≤ C₈ ≤ 12;
- 1 ≤ C₁₀ ≤ 10;
- 25 ≤ C₁₂ ≤ 45;
- 8 ≤ C₁₄ ≤ 18;
- 8 ≤ C₁₆ ≤ 18;
- 1 ≤ C_{18:0} ≤ 10;
- 14 ≤ C_{18:1} ≤ 24;
- 1 ≤ C_{18:2} ≤ 10.
In addition, the present fat blend is characterised by the following N-profile:
- 65 ≤ N₀ ≤ 85;
- 52 ≤ N₁₀ ≤ 72;
- 37 ≤ N₁₅ ≤ 57;
- 7 ≤ N₂₀ ≤ 27;
- 0 ≤ N₃₀ ≤ 10;
- N₃₅ ≤ 2.

The fat blend of the present invention may suitably be prepared from non-hydrogenated vegetable oils, e.g. by blending a lauric fat such as coconut oil with an an olein fraction of palm oil.

### DETAILED DESCRIPTION OF THE INVENTION

Accordingly, one aspect of the invention relates to the use of a fat blend in coatings for ice confection, said fat blend not containing an inesterified oil and being characterised by the following fatty acid composition:
- 2 wt.% ≤ C₈ ≤ 12 wt.%;
- 1 wt.% ≤ C₁₀ ≤ 10 wt.%;
- 25 wt.% ≤ C₁₂ ≤ 45 wt.%;
- 8 wt.% ≤ C₁₄ ≤ 18 wt.%;
- 8 wt.% ≤ C₁₆ ≤ 18 wt.%;
- 1 wt.% ≤ C_{18:0} ≤ 10 wt.%;
- 14 wt.% ≤ C_{18:1} ≤ 24 wt.%;
- 1 wt.% ≤ C_{18:2} ≤ 10 Wt.%; and
- total trans-unsaturated fatty acids < 4 wt.%;
- total cis-unsaturated fatty acids 14 - 28 wt.%
said fat blend further being characterised by the following solid fat profile:
- 65% ≤ N₀ ≤ 85%;
- 52% ≤ N₁₀ ≤ 72%;
- 37% ≤ N₁₅ ≤ 57%;
- 7% ≤ N₂₀ ≤ 27%;
- 0% ≤ N₃₀ ≤ 10%;
- N₃₅ ≤ 2%.

The concentrations of fatty acids as referred to in here, unless indicated otherwise, are calculated on the total amount of fatty acids present in the fat blend.

The expression Cₓ fatty acid refers to a fatty acid with a carbon chain length of x. Unless otherwise indicated, Cₓ refers to a saturated fatty acid with x carbon atoms. Thus, palmitic acid is a C₁₆ fatty acid. The expression C_{x:y} refers to a fatty acid with a carbon chain length of x which contains y double bonds. Thus, stearic acid is a C_{18:0} fatty acid, whereas oleic acid is a C_{18:1} fatty acid.

According to a preferred embodiment, C₁₂ fatty acid is lauric acid, C₁₄ fatty acid is myristic acid, C₁₆ fatty acid is palmitic acid, C_{18:0} fatty acid is stearic acid, C_{18:1} is oleic acid and C_{18:2} is linoleic acid.

The solid fat profile of the present fat blend and of components used in said fat blend is determined by measuring the N-value at different temperatures. The N value a temperature x °C is referred to in here as Nₓ. These N-values can suitably be measured using the generally accepted analytical method that is based on NMR measurements: Sample pre-treatment involves heating to 60 °C, 5 minutes at 60 °C, 60 minutes at 0 °C and 30 minutes at the measuring temperature.

Throughout this document the terms fat and oil are used interchangeably. Both terms refer to fatty acid glycerol esters such as triglycerides, diglycerides and monoglycerides. According to a preferred embodiment, the terms oil and fat as used herein refer to triglycerides and diglycerides. Most preferably, the terms fat and oil as used herein are synonymous to triglycerides.

Due to the fact that the present fat blend can be prepared without using partially hydrogenated components, substantial levels of trans fatty acids can be avoided. Accordingly, the fat blend preferably has a trans fatty acid content of less than 3%, more preferably of less than 2.5%, and most preferably of less than 2% by weight of the total amount of fatty acids.

As will be evident from the above, the present fat blend advantageously contains no partially hydrogenated oil. It is known in the art that fully hydrogenated oils do not contain substantial levels of trans-unsaturated fatty acids. Hence, fully hydrogenated oils may be employed in the present fat blend. Preferably, however, the present fat blend contains no hydrogenated oil, i.e. no partially or fully hydrogenated oil.

The present fat blend for use according to the invention contains no interesterified oil. Interesterification, like hydrogenation, is a method that modifies the chemical composition of a vegetable oil. The present invention offers the advantage that it provides a fat blend that performs very well in ice confection coatings, which fat blend can be produced without using oil modification techniques such as hydrogenation and/or interesterification.

The fat blend is characterised by a very steep melting curve between 10 and 20 °C. Accordingly, in a preferred embodiment, N₁₀ - N₂₀ exceeds 35%, preferably it exceeds 40%.

In a preferred embodiment, the present fat blend for use according to the invention contains 40-80 wt.% C₈-C₁₄ fatty acids. The fat blend's content of saturated C₁₆-C₁₈ fatty acids, preferably is within the range of 9 - 29 wt.%. The level of cis-unsaturated C₁₆-C₂₂ fatty acids in the fat blend preferably is in the range of 15-26 wt.%.

In a preferred embodiment, the weight ratio palmitic acid to stearic acid in the fat blend for use according to the invention exceeds 1:1. In another preferred embodiment, the weight ratio palmitic acid to C₁₈-C₂₂ saturated acids exceeds 2:3, preferably it exceeds 1:1.

Another aspect of the invention relates to a fat-based coating composition for coating ice confection, containing:
- 20-80 wt.%, preferably 45-75 wt.% of a fat blend as defined in any one of the preceding embodiments;
- 18-50 wt.%, preferably 20-40 wt.% of sugar;
- up to 30 wt.%, preferably 0 - 10 wt.% of milk ingredients;
- up to 30 wt.% of cocoa ingredients; and
- up to 5 wt. % of other food ingredients, such as emulsifiers, colours and flavours.

A typical example of a fat-based coating composition is a chocolate coating. Typically, such a chocolate coating contains at least 5 wt.%, preferably at least 10 wt.% of cocoa ingredients.

A further aspect of the invention relates to a coated ice confection comprising an ice confection core and a fat-based outer coating layer that is composed of a fat-based coating composition as defined herein before. The coated ice confection may suitably be prepared by dipping a core of ice confection into the molten coating composition, by spraying the molten coating composition onto the ice confection core or by passing the ice confection core through a falling film of molten coating composition.

Yet another aspect of the invention concerns a method of preparing a fat blend as defined in claim 10.

The invention is further illustrated by means of the following examples.

### Example 1

A cocoa containing ice cream coating composition was prepared on the basis of the following recipe:

| **Ingredient** | **% by weight** |
|---|---|
| Fat blend ^{#} | 63,38 |
| Sugar | 23 |
| Cocoa powder (10 - 12% fat) | 13 |
| Emulsifier (lecithin) | 0,6 |
| Flavour | 0,02 |
| | **100** |

| | |
|---|---|
| ^{#} Blend of 48.38 parts by weight coconut oil and 15 part by weight palm olein (IV = 62) | |

The coating composition was prepared as follows:
The fat blend was heated in a vessel to approximately 50-60°C. The particulate materials, i.e. the cocoa powder and sugar were milled. Next, the milled material is added to the molten fat blend together with emulsifier and flavour. The added ingredients were homogeneously dispersed throughout the molten fat by mixing.

Because the composition so obtained contained relatively large solid particles that adversely affect the mouthfeel, said composition was refined in a ball mill. The coating composition obtained from the ball mill had a temperature of approximately 50°C. The coating composition was cooled down 30-35°C, at which temperature the fat is still completely molten.

Subsequently, an ice cream core can be dipped in the molten coating composition, following which the fat in the coating composition will start crystallising immediately. The coated ice cream product so obtained exhibits very satisfying properties. More particularly, the coating so produced combines good elasticity with good drying times. Furthermore, at 0 °C the coating does not suffer from brittleness.

### Example 2

A coloured ice cream coating composition was prepared on the basis of the following recipe, using the process described in Example 1:

| **Ingredient** | **% by weight** |
|---|---|
| Fat blend | 66 |
| Sugar | 32,5 |
| Colour | 0,8 |
| Emulsifier (lecithins) | 0,5 |
| Flavour | 0,2 |
| | **100** |

| | |
|---|---|
| ^{#} Blend of 51 parts by weight coconut oil and 15 part by weight palm olein (IV = 62) | |

## Claims

1. Use of a fat blend in coatings for ice confection, said fat blend not containing an interesterified oil and being **characterised by** the following fatty acid composition:
• 2 wt.% ≤ C₈ ≤ 12 wt.%;
• 1 wt.% ≤ C₁₀ ≤ 10 wt.%;
• 25 wt.% ≤ C₁₂ ≤ 45 wt.%;
• 8 wt.% ≤ C₁₄ ≤ 18 wt.%;
• 8 wt.% ≤ C₁₆ ≤ 18 wt.%;
• 1 wt.% ≤ C_{18:0} ≤ 10 wt.%;
• 14 wt.% ≤ C_{18:1} ≤ 24 wt.%;
• 1 wt.% ≤ C_{18:2} ≤ 10 wt.%; and
• total trans-unsaturated fatty acids < 4 wt.%;
• total cis-unsaturated fatty acids 14 - 28 wt.%
said fat blend further being **characterised by** the following solid fat profile:
• 65% ≤ N₀ ≤ 85%;
• 52% ≤ N₁₀ ≤ 72%;
• 37% ≤ N₁₅ ≤ 57%;
• 7% ≤ N₂₀ ≤ 27%;
• 0% ≤ N₃₀ ≤ 10%;
• N₃₅ ≤ 2%.

2. Use according to claim 1, containing less than 3 wt.%, preferably less than 2 wt.% of trans-unsaturated fatty acids.

3. Use according to claim 1 or 2 containing no partially hardened fats or oils

4. Use according to any one of the preceding claims, wherein the N₁₀ - N₂₀ exceeds 35%, preferably exceeds 40%.

5. User according to any one of the preceding claims, containing 40 - 80 wt.% C₈-C₁₄ fatty acids.

6. Use according to any one of the preceding claims, containing 9-29 wt.% saturated C₁₆-C₁₈ fatty acids.

7. Use according to any one of the preceding claims, wherein the weight ratio palmitic acid to stearic acid exceeds 1:1.

8. Fat-based coating composition for coating ice confection, containing:
• 20-80 wt.% of a fat blend as defined in any one of the preceding claims;
• 18-50 wt.% of sugar;
• up to 30 wt.% of milk ingredients; and
• up to 30 wt.% of cocoa ingredients.
• up to 5 wt. % of other food ingredients.

9. Coated ice confection comprising an ice confection core and a fat-based outer coating layer that is composed of a fat-based coating composition according to claim 8.

10. A method of preparing a fat blend that is **characterised by** the following fatty acid composition:
• 2 wt.% ≤ C₈ ≤ 12 wt.%:
• 1 wt.% ≤ C₁₀ ≤ 10 wt.%:
• 25 wt.% ≤ C₁₂ ≤ 45 wt.%:
• 8 wt.% ≤ C₁₄ ≤ 18 wt.%:
• 8 Wt.% ≤ C₁₆ ≤ 18 Wt.%;
• 1 wt.% ≤ C_{18:0} ≤ 10 wt.%;
• 14 wt.% ≤ C_{18:1} ≤ 24 wt.%:
• 1 wt.% ≤ C_{18:2} ≤ 10 wt.%; and
• total trans-unsaturated fatty acids < 4 wt.%:
• total cis-unsaturated fatty acids 14 - 28 wt.%
said fat blend further being **characterised by** the following solid fat profile:
• 65% < N₀ ≤_ 85%;
• 52% ≤ N₁₀ ≤ 72%;
• 37% ≤ N₁₅ ≤ 57%;
• 7% ≤ N₂₀ ≤ 27%;
• 0% ≤ N₃₀ ≤ 10%;
• N₃₅ ≤ 2%:
• N₃₅ ≤ 2%:
said method comprising admixing:
• 60 - 90 wt.% of lauric fat selected from the group of coconut oil; palmkernel oil and combinations thereof;
• 10 - 40 wt.% of palm olein with an iodine value of more than 55, an oleic acid content of 50-70 wt.% and a palmitic acid content of 20-40 wt.%.

## Patentansprüche

1. Verwendung einer Fettmischung in Überzügen für Speiseeis, wobei die Fettmischung kein umgeestertes Öl enthält und durch die folgende Fettsäurezusammensetzung **gekennzeichnet** ist:
• 2 Gew.-% ≤ C₈ ≤ 12 Gew.-%;
• 1 Gew.-% ≤ C₁₀ ≤ 10 Gew.-%;
• 25 Gew.-% ≤ C₁₂ ≤ 45 Gew.-%;
• 8 Gew.-% ≤ C₁₄ ≤ 18 Gew.-%;
• 8 Gew.-% ≤ C₁₆ ≤ 18 Gew.-%;
• 1 Gew.-% ≤ C_{18:0} ≤ 10 Gew.-%;
• 14 Gew.-% ≤ C_{18:1} ≤ 24 Gew.-%;
• 1 Gew.-% ≤ C_{18:2} ≤ 10 Gew.-%; und
• gesamte trans-ungesättigte Fettsäuren < 4 Gew.-%;
• gesamte cis-ungesättigte Fettsäuren 14 - 28 Gew.%
wobei die Fettmischung außerdem durch das folgende Festfettprofil **gekennzeichnet** ist:
• 65% ≤ N₀ ≤ 85%;
• 52% ≤ N₁₀ ≤ 72%;
• 37% ≤ N₁₅ ≤ 57%;
• 7% ≤ N₂₀ ≤ 27%;
• 0% ≤ N₃₀ ≤ 10%;
• N₃₅ ≤ 2 %.

2. Verwendung nach Anspruch 1, enthaltend weniger als 3 Gew.-%, vorzugsweise weniger als 2 Gew.-% trans-ungesättigte Fettsäuren.

3. Verwendung nach Anspruch 1 oder 2, enthaltend keine teilweise gehärteten Fette oder Öle.

4. Verwendung nach einem der vorangehenden Ansprüche, wobei das N₁₀ - N₂₀ 35 % übersteigt, vorzugsweise 40 % übersteigt.

5. Verwendung nach einem der vorangehenden Ansprüche, enthaltend 40 - 80 Gew.-% C₈-C₁₄-Fettsäuren.

6. Verwendung nach einem der vorangehenden Ansprüche, enthaltend 9 - 29 Gew.-% gesättigte C₁₆-C₁₈-Fettsäuren.

7. Verwendung nach einem der vorangehenden Ansprüche, wobei das Gewichtsverhältnis von Palmitinsäure zu Stearinsäure 1:1 übersteigt.

8. Überzugszusammensetzung auf Fettbasis zum Überziehen von Speiseeis, enthaltend:
• 20 - 80 Gew.-% einer Fettmischung, wie sie in einem der vorangehenden Ansprüche definiert ist;
• 18 - 50 Gew.-% Zucker;
• bis zu 30 Gew.-% Milchbestandteile; und
• bis zu 30 Gew.-% Kakaobestandteile;
• bis zu 5 Gew.-% andere Nahrungsmittelbestandteile.

9. Überzogenes Speiseeis umfassend einen Speiseeiskern und eine äußere Überzugsschicht auf Fettbasis, welche aus einer Überzugszusammensetzung auf Fettbasis nach Anspruch 8 zusammengesetzt ist.

10. Verfahren zum Herstellen einer Fettmischung, welche durch die folgende Fettsäurezusammensetzung **gekennzeichnet** ist:
• 2 Gew.-% ≤ C₈ ≤ 12 Gew.-%;
• 1 Gew.-% ≤ C₁₀ ≤ 10 Gew.-%;
• 25 Gew.-% ≤ C₁₂ ≤ 45 Gew.-%;
• 8 Gew.-% ≤ C₁₄ ≤ 18 Gew.-%;
• 8 Gew.-% ≤ C₁₆ ≤ 18 Gew.-%;
• 1 Gew.-% ≤ C_{18:0} ≤ 10 Gew.-%;
• 14 Gew.-% ≤ C_{18:1} ≤ 24 Gew.-%;
• 1 Gew.-% ≤ C_{18:2} ≤ 10 Gew.-%; und
• gesamte trans-ungesättigte Fettsäuren < 4 Gew.-%;
• gesamte cis-ungesättigte Fettsäuren 14 - 28 Gew.%
wobei die Fettmischung außerdem durch das folgende Festfettprofil **gekennzeichnet** ist:
• 65% ≤ N₀ ≤ 85%;
• 52% ≤ N₁₀ ≤ 72%;
• 37% ≤ N₁₅ ≤ 57%;
• 7% ≤ N₂₀ ≤ 27%;
• 0% ≤ N₃₀ ≤ 10%;
• N₃₅ ≤ 2 %.
wobei das Verfahren das Vermischen von
• 60 - 90 Gew.-% Laurinfett, ausgewählt aus der Gruppe von Kokosnussöl; Palmkernöl und Kombinationen davon;
• 10 - 40 Gew.-% Palmolein mit einer lodzahl von mehr als 55, einem Ölsäuregehalt von 50 - 70 Gew.-% und einem Palmitinsäuregehalt von 20 - 40 Gew.-% umfasst.

## Revendications

1. Utilisation d'un mélange de graisses dans des enrobages de glaces, ledit mélange de graisses ne contenant pas d'huile inter-estérifiée et étant **caractérisé par** la composition en acides gras suivante:
• 2% en poids ≤ C₈ ≤ 12% en poids;
• 1% en poids ≤ C₁₀ ≤ 10% en poids;
• 25% en poids ≤ C₁₂ ≤ 45% en poids;
• 8% en poids C₁₄ ≤ 18% en poids;
• 8% en poids ≤ C₁₆ ≤ 18% en poids;
• 1% en poids ≤ C_{18:0} ≤ 10% en poids;
• 14% en poids ≤ C_{18:1} ≤ 24% en poids;
• 1% en poids ≤ C_{18:2} ≤ 10% en poids; et
• acides gras trans-insaturés totaux < 4% en poids;
• acides gras cis-insaturés totaux 14 - 28% en poids;
ledit mélange de graisses étant en outre **caractérisé par** le profil de graisses solides suivant:
• 65% ≤ N₀ ≤ 85%;
• 52% ≤ N₁₀ ≤ 72%;
• 37% ≤ N₁₅ ≤ 57%;
• 7% ≤ N₂₀ ≤ 27%;
• 0% ≤ N₃₀ ≤ 10%;
• N₃₅ ≤ 2%.

2. Utilisation selon la revendication 1, contenant moins de 3% en poids, de préférence, moins de 2% en poids d'acides gras trans-insaturés.

3. Utilisation selon la revendication 1 ou 2, ne contenant pas de graisses ou d'huiles partiellement durcies.

4. Utilisation selon l'une quelconque des revendications précédentes, où le N₁₀ - N₂₀ dépasse les 35%, de préférence, dépasse les 40%.

5. Utilisation selon l'une quelconque des revendications précédentes, contenant 40 - 80% en poids d'acides gras en C₈-C₁₄.

6. Utilisation selon l'une quelconque des revendications précédentes, contenant 9 - 29% en poids d'acides gras saturés en C₁₆-C₁₈.

7. Utilisation selon l'une quelconque des revendications précédentes, où le rapport pondéral de l'acide palmitique à l'acide stéarique dépasse 1:1.

8. Composition d'enrobage à base de graisses servant à enrober de la glace, contenant:
• 20-80% en poids d'un mélange de graisses tel que défini dans l'une quelconque des revendications précédentes;
• 18-50% en poids de sucre;
• jusqu'à 30% en poids d'ingrédients laitiers; et
• jusqu'à 30% en poids d'ingrédients à base de cacao;
• jusqu'à 5% en poids d'autres ingrédients alimentaires.

9. Glace enrobée comprenant un noyau glacé et une couche d'enrobage externe à base de graisses, qui est composée d'une composition d'enrobage à base de graisses selon la revendication 8.

10. Procédé de préparation d'un mélange de graisses qui est **caractérisé par** la composition en acides gras suivante:
• 2% en poids ≤ C₈ ≤ 12% en poids;
• 1% en poids ≤ C₁₀ ≤ 10% en poids;
• 25% en poids ≤ C₁₂ ≤ 45% en poids;
• 8% en poids ≤ C₁₄ ≤ 18% en poids;
• 8% en poids ≤ C₁₆ ≤ 18% en poids;
• 1% en poids ≤ C_{18:0} ≤ 10% en poids;
• 14% en poids ≤ C_{18:1} ≤ 24% en poids;
• 1% en poids ≤ C_{18:2} ≤ 10% en poids; et
• acides gras trans-insaturés totaux < 4% en poids;
• acides gras cis-insaturés totaux 14 - 28% en poids
ledit mélange de graisses étant en outre **caractérisé par** le profil de graisses solides suivant:
• 65% ≤ N₀≤ 85%;
• 52% ≤ N₁₀ ≤ 72%;
• 37% ≤ N₁₅ ≤ 57%;
• 7% ≤ N₂₀ ≤ 27%;
• 0% ≤ N₃₀ ≤ 10%;
• N₃₅ ≤ 2%;
ledit procédé comprenant l'étape consistant à incorporer:
• 60-90% en poids de graisse laurique choisie dans le groupe constitué par l'huile de coco, l'huile de palmiste et leurs combinaisons;
• 10-40% en poids d'oléine d'huile de palme ayant un indice d'iode supérieur à 55, une teneur en acide oléique de 50-70% en poids et une teneur en acide palmitique de 20-40% en poids.
